# EUROPEAN PATENT APPLICATION

(11) **EP 4 390 367 A1**
(43) Date of publication of application: **26.06.2024**
(21) Application number: 22307000.4
(22) Date of filing: 22.12.2022
(51) Int. Cl.: G01N 15/10, B01L 3/00

(54) **MEASURING DEVICE AND METHOD FOR PRODUCING MEASURING DEVICE**

(71) Applicant: Centre National de la Recherche Scientifique (CNRS), 75016 Paris (FR); Université de Lille, 59800 Lille (FR); Université Polytechnique Hauts-de-France, 59300 Valenciennes (FR); JUNIA, 59046 Lille Cedex (FR)
(72) Inventor: COLLARD, Dominique, 59130 LAMBERSART (FR); GERBEDOEN, Jean-Claude, 59270 BAILLEUL (FR); TARHAN, Mehmet Cagatay, 59130 LAMBERSART (FR); REZARD, Quentin, 59110 LA MADELEINE (FR)
(74) Representative: Hautier IP

(57) **Abstract**

A method for producing a measuring device (10) with a microflow channel (22) is provided. The device (10) includes an electrical sensing module (30) including at least two electrodes (32, 34) for characterizing objects in fluid flow. The method involves preparation of an SOI substrate (100) including top and bottom semiconductor layers (90, 50) and an intermediate oxide layer (70). The top layer is patterned to form a cavity defining the flow channel, the electrodes and a gap (92) adjacent to the respective electrodes along the flow channel. Then an insulating material (80, 82) is applied to each gap to form an insulating filling (81) for electrically insulating the electrical sensing module from the remaining top layer. The corresponding measuring device (10) is also provided.

## Description

### TECHNICAL FIELD

The present disclosure relates to a measuring device for measuring a physical characteristic of an object in fluid flow and a method for producing a measuring device having the corresponding configuration.

### TECHNICAL BACKGROUND

Biophysical cytometers based on MEMS (Microelectromechanical systems) technology are useful to perform high content analysis of biological objects such as individual cells and subsequent sorting of the objects according to their biophysical characteristics. Those cytometers may be used, for example, to identify cancer cells for the diagnostic purpose. WO 2021/069446 discloses such examples of flow cytometers comprising MEMS actuators and sensors. MEMS technology enables integration of a sensing module with a micro flow channel with detailed designs in the order of hundreds of nanometers to tens of micrometers.

Other examples of measuring systems for providing biophysical analysis of cells are available from:
(1) C. Honrado, P. Bisegna, N. S. Swami and F. Caselli, Single-cell microfluidic impedance cytometry: from raw signals to cell phenotypes using data analyticsLab Chip, 21, pp.22-54, (2021);
(2) Petchakup, C.; Li, K.H.H.; Hou, H.W., Advances in Single Cell Impedance Cytometry for Biomedical Applications, Micromachines 2017, 8, 87;
(3) Gawad S, Sun T, Green NG, Morgan H, Impedance spectroscopy using maximum length sequences: Application to single cell analysis (2007) Rev Sci Instrum 78:054301; and
(4) Q. Rezard, G. Perret, J.C. Gerbedoen, et al., IEEE Int. Conf. on MEMS (MEMS'21), pp. 494, (2021). Those microfluidic devices may be made from an SOI (Silicon on Insulator) wafer since it is compatible with integration of MEMS components. Some examples using SOI wafers are available from:
(5) S. Sharma, K. Buchholz, S. M. Luber, U. Rant, M. Tornow, and G. Abstreiter, "Silicon-on-Insulator Microfluidic Device With Monolithic Sensor Integration for MicroTAS Applications," Journal of Microelectromechanical Systems, vol. 15, no. 2, pp. 308-313, 2006, doi: 10.1109/jmems.2006.872222;
(6) T. Chingfu and H. Chenghan, "Thermal Bubble Microfluidic Gate Based on SOI Wafer," Journal of Microelectromechanical Systems, vol. 18, no. 4, pp. 852-859, 2009, doi: 10.1109/jmems.2009.2023882;
(7) B. Legrand, A. E. Ashcroft, L. Buchaillot, and S. Arscott, "SOI-based nanoelectrospray emitter tips for mass spectrometry: a coupled MEMS and microfluidic design," J. Micromech. Microeng., vol. 17, no. 3, pp. 509-514, 2007/02/06 2007, doi: 10.1088/0960-1317/17/3/013;
(8) https://www.xfab.com/technology/silicon-based-microfluidics;
(9) C. Adamopoulos, A. Gharia, A. Niknejad, V. Stojanovic, and M. Anwar, "Microfluidic Packaging Integration with Electronic-Photonic Biosensors Using 3D Printed Transfer Molding," Biosensors (Basel), vol. 10, no. 11, Nov 14 2020, doi: 10.3390/bios10110177;
(10) https://www.micralyne.com/technology-platforms/micrafluidics-silicon-microfluidic-mems-process/
(11) R. Reale, A. De Ninno, L. Businaro, P. Bisegna, and F. Caselli, "High-throughput electrical position detection of single flowing particles/cells with non-spherical shape," Lab Chip, 10.1039/C9LC00071B vol. 19, no. 10, pp. 1818-1827, May 14 2019, doi: 10.1039/c9lc00071b;
(12) S. Gawad, L. Schild, and P. Renaud, "Micromachined impedance spectroscopy flow cytometer for cell analysis and particle sizing," Lab on a Chip, vol. 1, no. 1, pp. 76-82, 2001, doi: 10.1039/b103933b;
(13) E. Rollo et al., "Label-free identification of activated T lymphocytes through tridimensional microsensors on chip," Biosensors and Bioelectronics, vol. 94, pp. 193-199, Aug 15 2017, doi: 10.1016/j.bios.2017.02.047;
(14) X. Huang et al., "Self-aligned sequential lateral field non-uniformities over channel depth for high throughput dielectrophoretic cell deflection," Lab Chip, vol. 21, no. 5, pp. 835-843, Mar 9 2021, doi: 10.1039/d0lc01211d; and
(15) S. M. Weiz, M. Medina-Sánchez, and O. G. Schmidt, "Microsystems for Single-Cell Analysis," Advanced Biosystems, vol. 2, no. 2, 2018, doi: 10.1002/adbi.201700193.

There is, however, some limitation in the proposed systems. For example, a silicon wafer requires each electrode to be in electrical isolation to improve the quality of sensed signals. Also, the effect of nearby structures and electrical parasitics need to be minimized in order to provide reliable measurement and broader bandwidth.

The present disclosure aims to improve the signal quality obtained by a measuring device in order to allow physical analysis of target objects in fluid flow.

### SUMMARY OF THE DISCLOSURE

According to the present invention, there is provided a method for producing a measuring device for measuring physical characteristics of objects such as individual cells in fluid flow, the measuring device comprising a microfluidic chip provided with a flow channel for allowing fluid flow and an electrical sensing module including at least two electrodes and configured to acquire a physical characteristic of an object in the fluid flow; the method comprising: preparing an SOI substrate comprising a first semiconductor layer, a second semiconductor layer and an oxide layer provided between the first semiconductor layer and the second semiconductor layer, patterning at least the first semiconductor layer to form a cavity, the cavity defining lateral walls of the flow channel, a bottom wall of the flow channel connecting the lateral walls and the at least two electrodes, the cavity further defining a gap adjacent to each electrode along the flow channel; and applying an insulating material to each gap to form an insulating filling for electrically insulating the electrical sensing module from the remaining first semiconductor layer.

According to one aspect of the present invention, the insulating material may be a non-photo-patternable material, the applying of the insulating material further comprising: applying the insulating material to the cavity; applying a mask layer onto the insulating material in the cavity; patterning the mask layer according to a contour of each gap; and removing the insulating material according to the patterned mask layer.

According to one aspect of the present invention, the insulating material may be a photo-patternable material, the applying of the insulating material further comprising: applying the insulating material to the cavity; and removing the insulating material in the cavity according to a contour of each gap.

According to one aspect of the present invention, the insulating material may be applied to each gap such that the insulating filling is substantially flush with the remaining first semiconductor layer.

According to one aspect of the present invention, the cavity may be formed to expose the oxide layer.

According to one aspect of the present invention, the cavity may be formed to expose the second semiconductor layer.

According to one aspect of the present invention, the method may further comprise: patterning at least the second semiconductor layer to form a further cavity in the second semiconductor layer to expose a portion of the oxide layer opposite which the electrical sensing module is provided, or to expose the first semiconductor layer; and applying an insulating material to the cavity to form an insulating filling for electrically insulating the electrical sensing module from the remaining second semiconductor layer.

According to one aspect of the present invention, there is provided a measuring device for measuring physical characteristics of objects such as individual cells in fluid flow, the measuring device comprising: a microfluidic chip including a flow channel configured to allow for fluid flow and an electrical sensing module configured to acquire a physical characteristic of an object in the fluid flow, wherein the chip comprises: a first semiconductor layer; a second semiconductor layer; and an oxide layer provided between the first and second semiconductor layers, wherein the first semiconductor layer is provided with a cavity, the cavity defining lateral walls of the flow channel and a bottom wall of the flow channel connecting the lateral walls, wherein the electrical sensing module comprises: at least two electrodes, one of the at least two electrodes being provided on one of the lateral walls of the flow channel, another of the at least two electrodes being provided on the other of the lateral walls of the flow channel, wherein the measuring device further comprises an insulating filing provided adjacent to each electrode along the flow channel and configured to electrically isolate each electrode from the first semiconductor layer.

According to one aspect of the present invention, the electrical sensing module may comprise at least four electrodes, the insulating fillings being configured to electrically isolate the electrodes from each other.

According to one aspect of the present invention, an interface between each electrode and the adjacent insulating material may be airtight.

According to one aspect of the present invention, the second semiconductor layer may be provided with a further cavity filled with an insulating filling that is in contact with the oxide layer opposite the first semiconductor layer or in direct contact with the first semiconductor layer.

According to one aspect of the present invention, the measuring device may further comprise a mechanical sensing module spaced apart from the electrical sensing module along the flow channel and configured to acquire a mechanical characteristic of the object in the fluid flow.

According to one aspect of the present invention, the mechanical sensing module may comprise a manipulator provided on one of the lateral walls of the flow channel and a sensor provided on the other of the lateral walls of the flow channel.

### BRIEF DESCRIPTION OF THE FIGURES

Embodiments of the present disclosure will be described in further details with reference to the accompanying drawings, in which:
Figure 1 is a schematic plan view showing the configuration of a measuring device according to one embodiment;
Figure 2 is a schematic perspective view showing the configuration of the measuring device of figure 1;
Figures 3A to 3H show the process of producing a measuring device according to one embodiment, in which an insulator is added to one of the semiconductor layers;
Figures 4A to 4F show the process of producing a measuring device according to another embodiment; and
Figures 5A to 5E show the process of providing an insulating structure on another semiconductor layer of the measuring device.

### DETAILED DESCRIPTION OF EMBODIMENTS

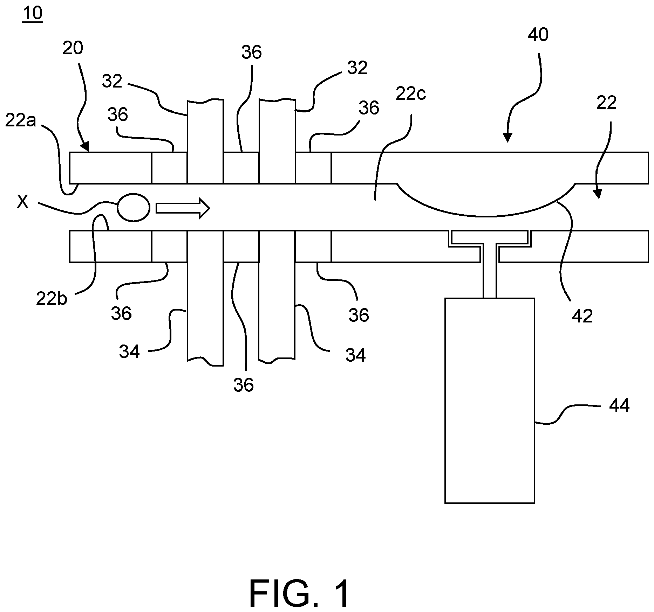

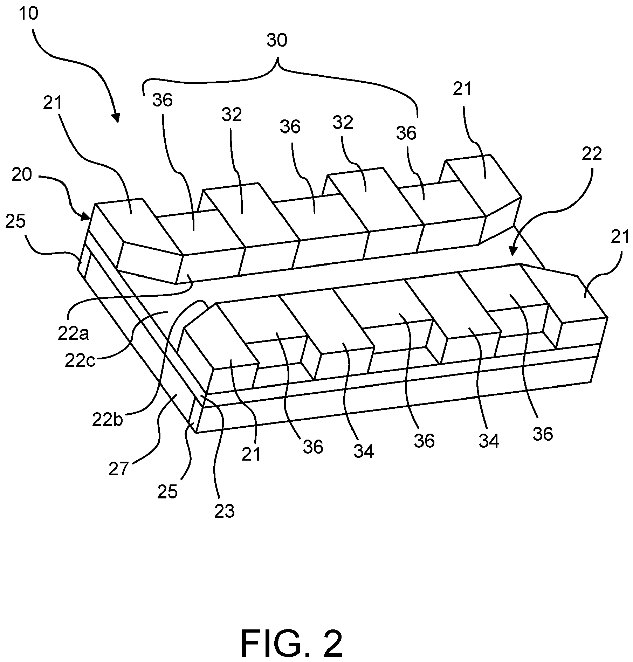

Referring to figures 1 and 2, a measuring device 10 according to one embodiment will be explained. The measuring device 10 may be used for a flow cytometer in order to perform biophysical characterization of objects such as individual cells flowing in a predefined channel, as described below by way of example. For example, the flow cytometer may be used to identify cancer cells from the samples introduced into the channel with fluid flow. The general concept of the flow cytometer is well known in the art and thus detailed explanations are omitted in the present disclosure. Nonetheless, the possible application of the measuring device 10 disclosed herein is not limited to characterization of individual cells. In fact, the measuring device 10 may also be used for characterization of other objects, including, but not being limited to, microbeads (e.g. polymer and silica), gels (e.g. DNA gels and cell culturing gels), organoids, liposomes, and exosomes.

The measuring device 10 comprises a microfluidic chip 20 provided with a flow channel 22 configured to allow for fluid flow that carries cells (a single cell X is schematically shown in figure 1) subjected to biophysical characterization. Cells are provided in the form of cell suspension or in any other forms compatible with the flow cytometry.

The chip 20 has a silicon-based layered structure made from an SOI (Silicon on Insulator) wafer, comprising a top silicon layer 21, a bottom silicon layer 25, and a silicon oxide layer 23 between the silicon layers 21 and 25. The flow channel 22 is in the form of a cavity formed in the top silicon layer 21. The flow channel 22 is delimited by a pair of opposing lateral walls 22a and 22b and a bottom wall 22c connecting the lateral walls 22a and 22b.

Although not illustrated, a cover layer such as a PDMS (polydimethylsiloxane) layer is fitted on the top silicon layer 21, thereby the flow channel 22 has a substantially closed structure over an area where the biophysical characterization takes place, while allowing for required installation of the measuring device 10 and connections of electrical components. The cover layer may also be formed from other polymers, or another material not limited to but including glass, quartz, or other wafers with a dielectric coating. The cover layer is provided with an inlet of the flow channel 22 where the cells are introduced and an outlet of the flow channel 22 connected to a vacuum pump (not shown) for creating continuous fluid flow within the flow channel 22.

The chip 20 also includes an electric sensing module 30 for acquiring physical properties of the cells in the flow channel 22. The physical characteristics to be acquired by the electric sensing module 30 are not limited to, but may include, cell size, membrane capacitance and cytoplasm resistivity.

The electrical sensing module 30 includes at least one driving electrode 32 and at least one sensing electrode 34. The driving electrode 32 provided on the lateral wall 22a of the flow channel 22. The sensing electrode 34 provided on the lateral wall 22b opposite the lateral wall 22a where the driving electrode 32 is provided. The distance between the electrodes 32 and 34 may be tens of micrometers. The electrodes 32 and 34 have a height equivalent to the thickness of the top silicon layer 21. The flow channel 22 may have a relatively small width in the area where the electrical sensing module 30 is provided in such a way that a single object, e.g. a cell, passes through at a time for the electrical characterization.

The electrical sensing module 30 may include two or more of the driving electrodes 32 and two or more of the sensing electrodes 34, each driving electrodes 32 being operated in different driving modes. The electrical sensing module 30 may include one driving electrode 32 on the lateral wall 22a and two or more sensing electrodes 34 provided on another lateral wall 22b.

Adjacent to the driving electrodes 32 and the sensing electrodes 34, insulators 36 are provided. The insulators 36 adjacent to the driving electrodes 32 electrically isolate the driving electrodes 32 from each other and from the remaining top silicon layer 21 of the chip 20. Likewise, the insulators 36 adjacent to the sensing electrodes 34 electrically isolate the sensing electrodes 34 from each other and from the remaining silicon layer 21. The interface between the insulator 36 and the driving electrodes 32 as well as the interface between the insulator 36 and the sensing electrode 34 is airtight to prevent fluid leakage from the flow channel 22. The insulators 36 may be made of any suitable material for the purpose of providing electrical insulation, including but not being limited to CYTOP (TM) or SU8.

Optionally, the chip may also comprise a mechanical sensing module 40 for performing mechanical characterization of the cells. The mechanical sensing module 40 is integrated with the chip 20. The mechanical sensing module 40 includes a manipulator 42 and a mechanical sensor 44. The manipulator 42 may be a stationary component in the form of a narrower passage as shown in figure 1. The mechanical sensor 44 may be a displacement sensor configured to detect displacement based on changes in capacitance in response to the individual cells flowing through the mechanical sensing module 40. The flow channel 22 is sufficiently narrow in an area where the mechanical sensing module 40 is provided, whereby a cell reaching the narrow passage is subjected to deformation. The mechanical sensor 44 detects the reaction of the cells, thereby acquiring mechanical properties of the cell, including but not limited to rigidity or viscosity. Alternatively, the manipulator may also be an adjustable manipulator configured to move toward or away from the opposing mechanical sensor 44, compressing a cell flowing the passage between the mobile manipulator and the mechanical sensor 44 in a controlled manner.

Optionally, the chip 20 may have an insulating filling 27 (see figure 2) in a cavity formed in the bottom silicon layer 25 over an area where the electrical sensing module 30 is disposed, or in other words the area where the measurement takes place by the electrical sensing module 30.

In operation, the cell suspension is introduced from the inlet of the flow channel 22, passing through the electrical sensing module 30 and the mechanical sensing module 40 where the respective biophysical characterizations take place.

A voltage is applied between the driving electrode 32 and the sensing electrode 34 at different frequencies, thereby generating an electric current flowing through the flow channel 22 and between the electrodes 32 and 34. When a cell is present in the electrical characterization area, the resistivity of the flow channel 22 locally increases. By measuring the increased resistivity, the electrical signatures of the individual cells are acquired. The presence of the cell also affects the vertical distribution of the electrical field in the channel.

According to the measuring device 10 having the above-described configuration, the insulators 36 separate the driving electrodes 32 from each other and from the top silicon layer 21. Therefore, a parasitic current that could possibly have been generated between them can be prevented and thus the signal quality sensed by the sensing electrode 34 is improved.

Further, the interfaces between the electrodes 32 and 34 and the insulators 36 are airtight. In other words, no slit is formed, unlike some existing devices, between the driving electrode 32 and the adjacent channel wall of the top silicon layer 21 as well as between the sensing electrode 34 and the adjacent channel wall. This ensures that introduction of the fluid into the flow channel 22 is performed efficiently because no air enters the flow channel 22 through those slits during the process of applying negative pressure at the outlet of the channel. In addition, such slits would have affected the signal quality sensed by the sensing module 34 due to parasitic signals that is to be generated between the electrodes and channel walls before and after passage of the flowing cells, in particular in case of fluid flow having a high flow rate. Therefore, the airtight structure of the present disclosure also contributes to the signal quality.

The optional formation of the insulating filling 27 in the bottom silicon layer 25 is also advantageous to further improve the signal quality. Without the insulating filling 27 behind the oxide layer 23, the bottom silicon layer 25 would have acted as an additional electrode that captures part of the electric current otherwise flowing between the electrodes 32 and 34 across the flow channel 22. This would have affected electrical signals sensed by the sensing electrode 34, depending on the distance between the flowing cell and the bottom silicon layer 25. The presence of the insulating filling 27 prevents the dispersion in measurement result, thereby enabling trajectory-free measurement.

The insulating filling 27 also prevents electric coupling between the top silicon layer 21 and the bottom silicon layer 25 which would have occurred in particular when the electrical sensing module 30 is operated at a high frequency of about 10 MHz or higher. Due to the presence of the insulating filing 27 underneath the electrical sensing module 30, the measurement device 10 is operable at high frequencies without affecting in measurement result.

The optional mechanical sensing module 40 enables integration of the system for performing the mechanical characterization of the individual cells in addition to the electrical characterization.

The measuring device 10 thus provides single-cell impedance spectroscopy in a continuous, uninterrupted flow, thereby achieving high throughput with improved measurement accuracy.

Next, a method for producing a measuring device 10 having the above-described configuration will be described.

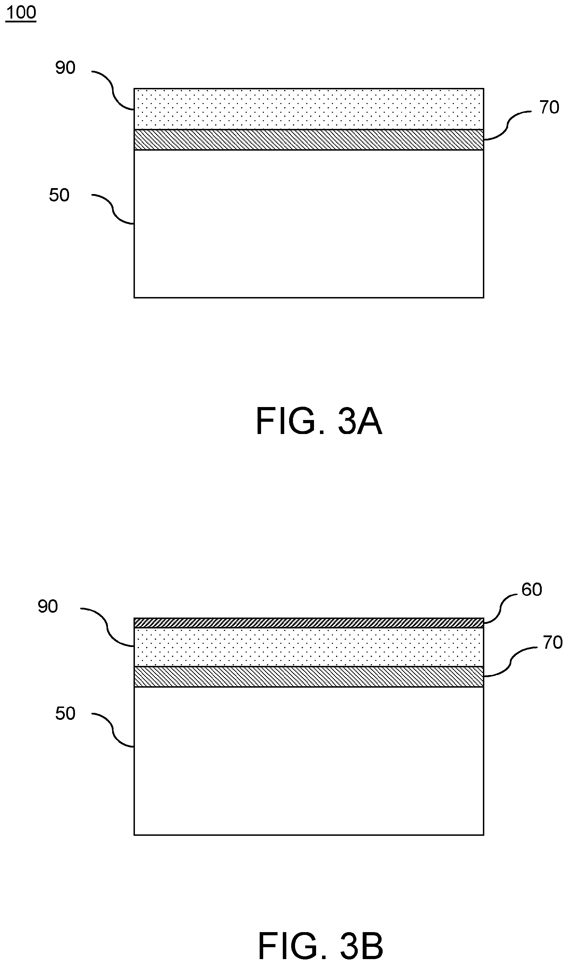

Figures 3A to 3H show the process of making a measuring device 10 according to one embodiment. According to the disclosed embodiment, the measuring device 10 in particular the chip 20 is made from an SOI (Silicon on Insulator) substrate 100. The SOI technology has been used for many years in the field of electronics and MEMS (Micro Electro Mechanical Systems) and thus well known to a person skilled in the art.

The SOI substrate 100 comprises a bottom semiconductor layer 50, an oxide layer 70 provided on the bottom semiconductor layer 50, and a top semiconductor layer 90 provided on the oxide layer 70 (figure 3A).

Aluminum coating is then applied onto the top semiconductor layer 90, forming a protective layer 60 (figure 3B).

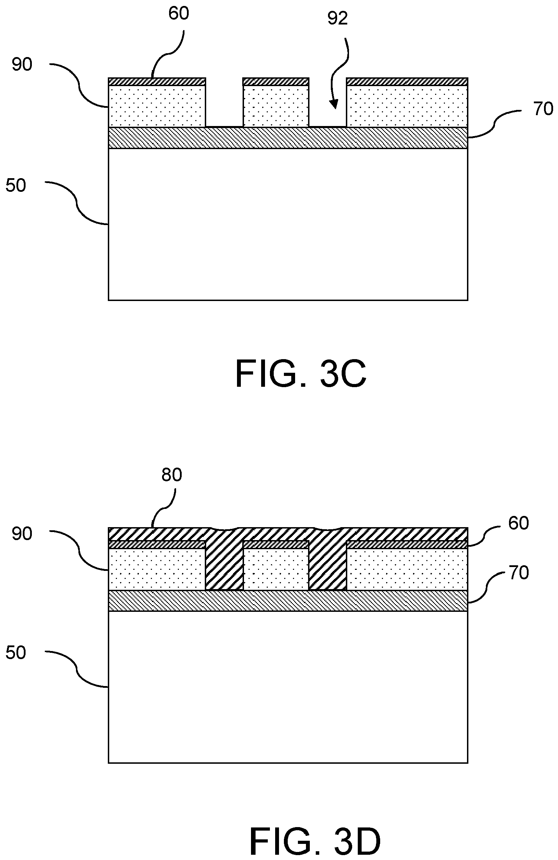

The protective layer 60 is patterned by means of photolithography and the top semiconductor layer 90 is patterned by means of DRIE etching (Deep Reactive Ion Etching) to form a cavity corresponding to the shapes of the flow channel 20, the electrical sensing module 30 and gaps 92 adjacent to the electrical sensing module 30 (figure 3C). Optionally, the mechanical sensing module 40 is also provided in the process.

An insulating material 80 such as CYTOP (TM) is applied to the gap 92 as well as onto the top of the protective layer 60, for example, by means of deposition (figure 3D).

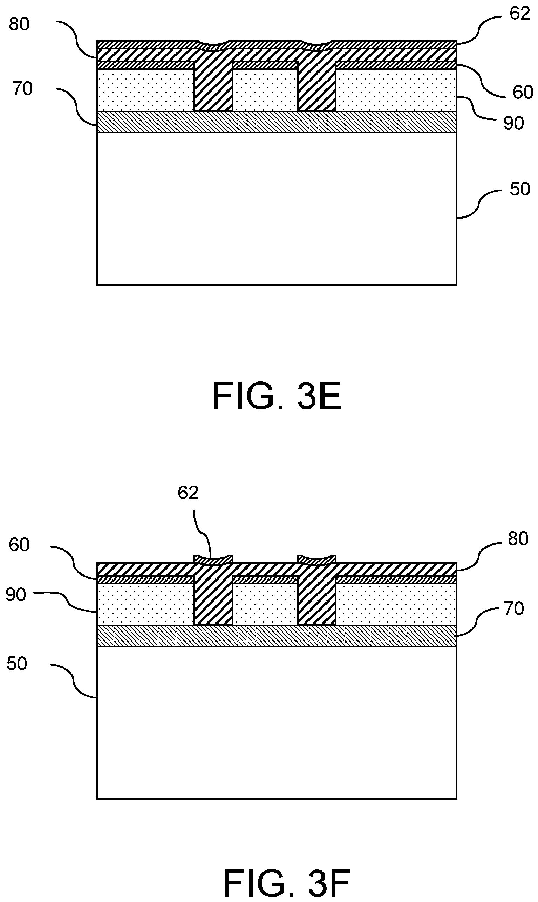

Further aluminum coating is applied onto the insulating material 80 to form a protective layer 62 (figure 3E).

Then, the protective layer 62 is patterned by photolithography and removed by etching, leaving a portion where the gaps 92 are formed (See figure 3F together with figure 3C).

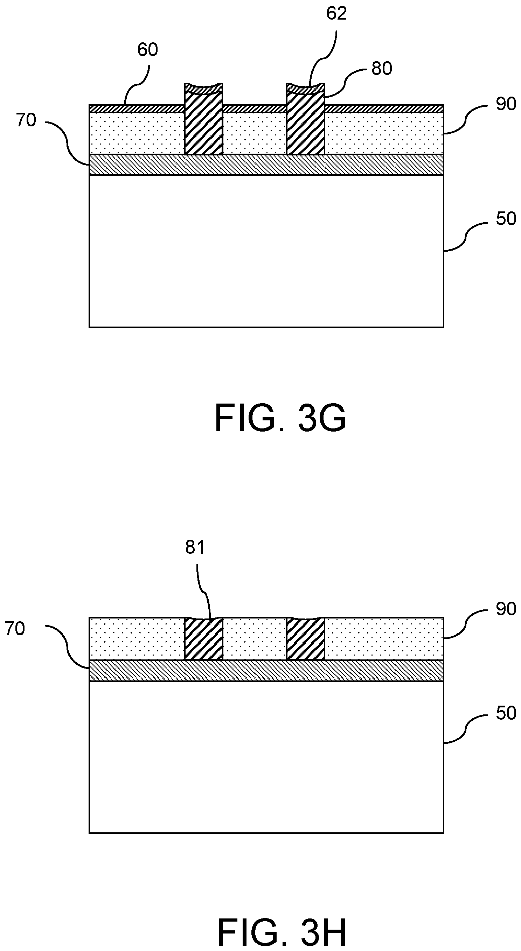

A portion of the insulating material 80 which is not covered by the patterned protective layer 62 is removed, for example, by plasma etching (figure 3G).

The remaining protective layer 62 is then removed and the insulating material 80 underneath the protective layer 62 is removed by plasma etching to form the insulating filling 81 having a surface substantially in flush with the top of the top semiconductor layer 90 (figure 3H). Keeping the insulating filling 80 flush with the top semiconductor layer 90 is advantageous since it improves adherence of the cover layer such as a PDMS cover film over the entirety of the measuring device 10, in particular the sensing area, thereby preventing fluid leakage from the sensing area.

According to the disclosed method, the measuring device comprising the individually polarizable electrodes and the preferred electrical isolations are produced. The method is advantageously compatible with mass production of the measuring device 10 integrated with the electrical sensing module 30 and optionally with the mechanical sensing module 40.

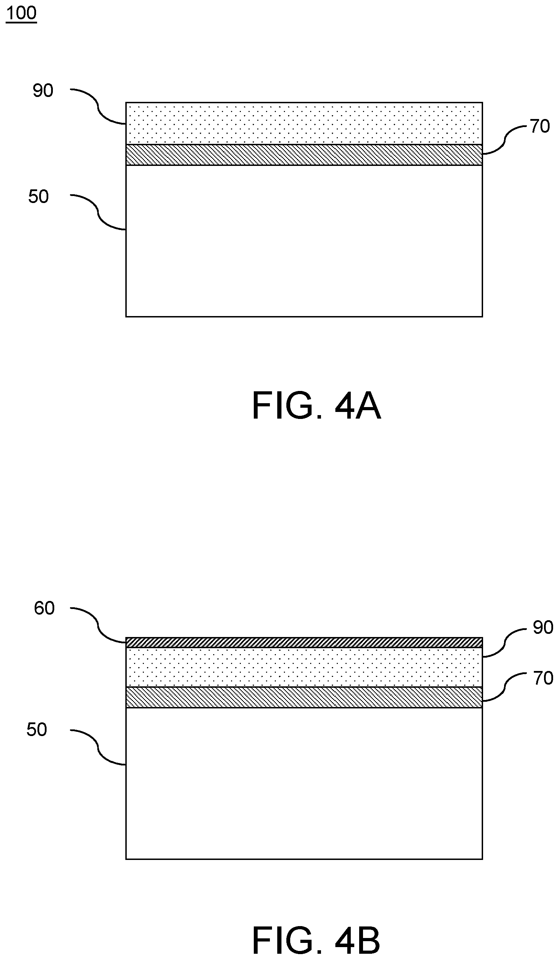

Referring to figures 4A to 4F, a method for producing the measuring device 10 according to another embodiment will be described.

Starting from an SOI substrate 100, substantially the same steps are carried out as those described above with reference to figures 3A to 3C to form the gaps 92 adjacent to the driving electrodes 32 and the sensing electrodes 34 of the electrical sensing module 30 (figures 4A to 4C).

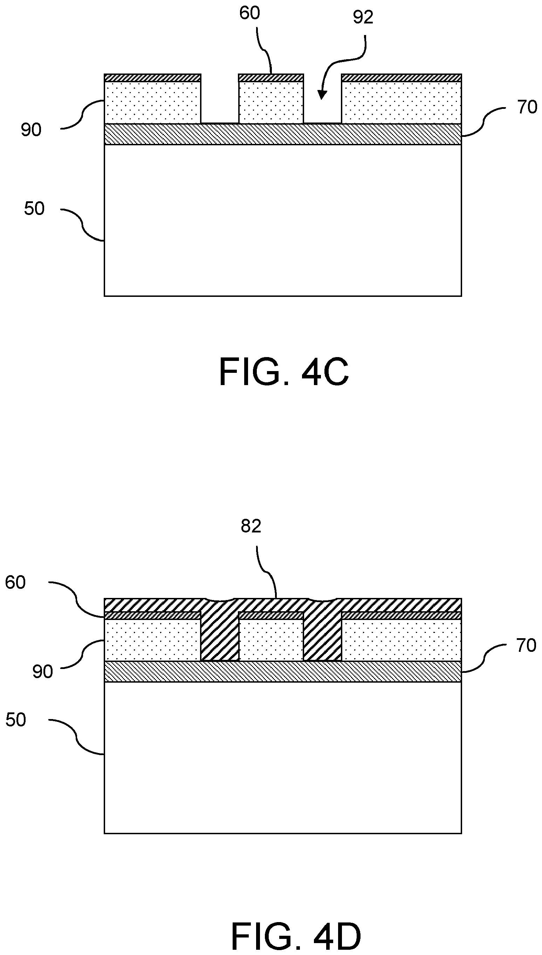

Then, a photoresist such as SU8 is applied by deposition in the gaps 92 and on the top of the protective layer 60 (figure 4D), to obtain a photoresist layer 82.

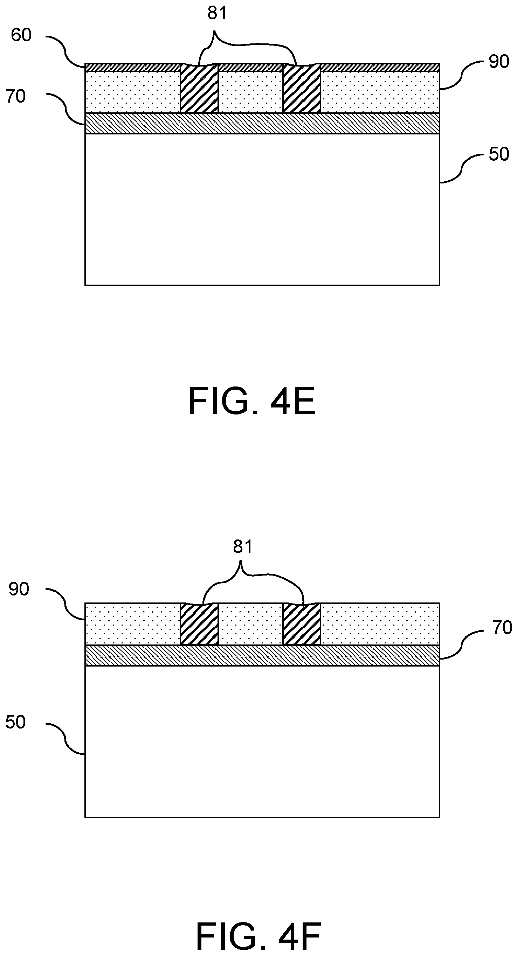

The photoresist layer 82 is patterned by photolithography to remove the portion covering the top of the protective layer 60 to form an insulating filling 81 within the gaps 92 (figure 4E).

Finally, the protective layer 60 is removed to expose the top semiconductor layer 90 underneath (figure 4F).

This process also enjoys the same advantages as the method as described above with reference to figures 3A to 3H.

Although the embodiments as described above involve removal of a portion of the top semiconductor layer 90 as a result of the patterning step with reference to figures 3C and 4C, the oxide layer 70 may also be removed in order to expose the bottom semiconductor layer 50 behind the oxide layer 70.

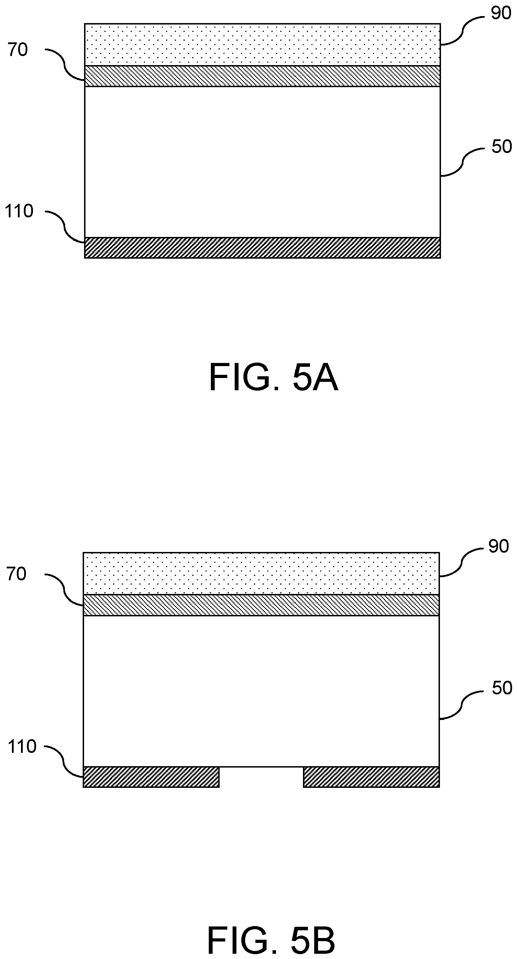

Referring to figures 5A to 5E, an example of the process of replacing a portion of the bottom semiconductor layer 50 of the measuring device 10 by an insulator will be described.

Onto the bottom semiconductor layer 50 of the SOI substrate 100 (see figure 4A, for example), aluminum coating is applied to form a protective layer 110 (figure 5A).

The protective coating 110 is patterned by photolithography to expose a portion of the bottom semiconductor layer 50 where the insulating filling is to be provided (figure 5B).

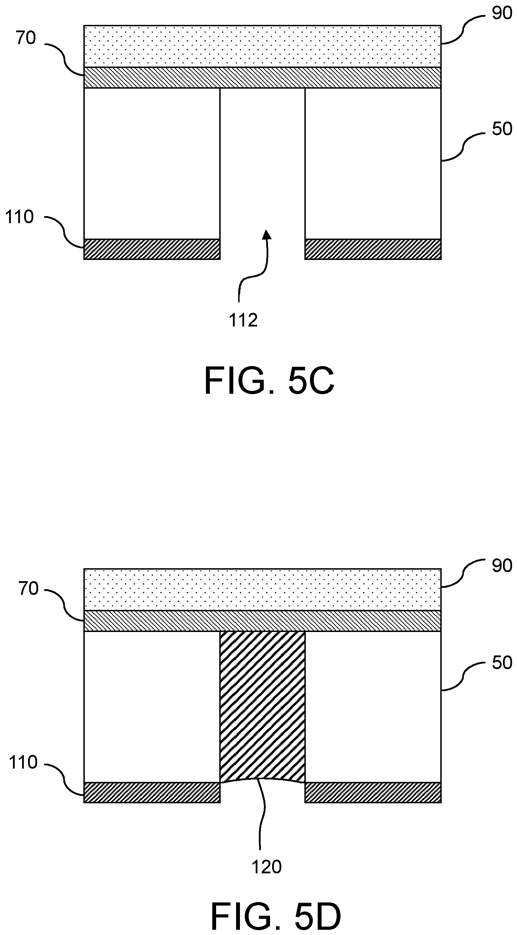

A portion of the first semiconductor layer 50 which was not covered by the protective layer 110 is removed by DRIE to form cavities 112 (figure 5C).

An insulating material, for example, PDMS, is locally deposited to the cavities 112 (figure 5D) to obtain an insulating filling 120 in the cavities 112 (figure 5D).

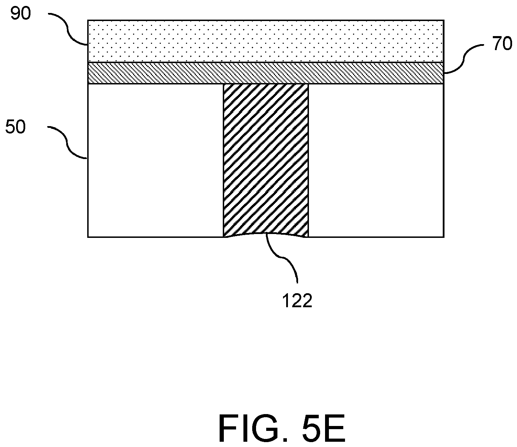

Finally, the protective layer 110 is removed to expose the bottom of the remaining first semiconductor layer 50 (figure 5E). The removal of the protective layer 110 is optional. In fact, the protective layer 110 may remain in the measuring device 10, provided that the protective layer 110 is grounded.

The method described above with reference to figures 5A to 5E is also advantageously compatible with mass production of the measuring device 10 having the insulator on the side of the device opposite the electrical sensing module 30.

According to another embodiment, the method may further involve removal of a portion of the oxide layer 70 during the process of forming the cavities 112 in order to expose the top semiconductor layer 90 behind the oxide layer 70.

Although some particular embodiments of the present disclosure are described above with reference to the accompanying drawings, modification, addition or omission of optional features of the embodiments may be made by the skilled person within the scope of the appended claims.

## Claims

1. A method for producing a measuring device (10) for measuring physical characteristics of objects such as individual cells in fluid flow,
the measuring device comprising a microfluidic chip (20) provided with a flow channel (22) for allowing fluid flow and an electrical sensing module (30) including at least two electrodes (32, 34) and configured to acquire a physical characteristic of an object in the fluid flow;
the method comprising:
preparing an SOI substrate (100) comprising a first semiconductor layer (90), a second semiconductor layer (50) and an oxide layer (70) provided between the first semiconductor layer and the second semiconductor layer,
patterning at least the first semiconductor layer to form a cavity, the cavity defining lateral walls (22a, 22b) of the flow channel, a bottom wall (22c) of the flow channel connecting the lateral walls and the at least two electrodes, the cavity further defining a gap (92) adjacent to each electrode along the flow channel; and
applying an insulating material (80, 82) to each gap to form an insulating filling (81) for electrically insulating the electrical sensing module from the remaining first semiconductor layer.

2. A method according to claim 1, wherein the insulating material is a non-photo-patternable material,
the applying of the insulating material further comprising:
applying the insulating material to the cavity;
applying a mask layer (62) onto the insulating material in the cavity;
patterning the mask layer according to a contour of each gap (92); and
removing the insulating material (80) according to the patterned mask layer.

3. A method according to claim 1, wherein the insulating material is a photo-patternable material,
the applying of the insulating material further comprising:
applying the insulating material (82) to the cavity; and
removing the insulating material in the cavity according to a contour of each gap.

4. A method according to any one of claims 1 to 3, wherein the insulating material is applied to each gap such that the insulating filling (81) is substantially flush with the remaining first semiconductor layer (90).

5. A method according to any one of claims 1 to 4, wherein the cavity is formed to expose the oxide layer.

6. A method according to any one of claims 1 to 4, wherein the cavity is formed to expose the second semiconductor layer.

7. A method according to any one of claims 1 to 6, further comprising:
patterning at least the second semiconductor layer (50) to form a further cavity (112) in the second semiconductor layer (50) to expose a portion of the oxide layer (70) opposite which the electrical sensing module (30) is provided, or to expose the first semiconductor layer (90); and
applying an insulating material (120) to the cavity to form an insulating filling (122) for electrically insulating the electrical sensing module from the remaining second semiconductor layer.

8. A measuring device (10) for measuring physical characteristics of objects such as individual cells in fluid flow, the measuring device comprising:
a microfluidic chip (20) including a flow channel (22) configured to allow for fluid flow and an electrical sensing module (30) configured to acquire a physical characteristic of an object in the fluid flow,
wherein the chip comprises:
a first semiconductor layer (21);
a second semiconductor layer (25); and
an oxide layer (23) provided between the first and second semiconductor layers,
wherein the first semiconductor layer is provided with a cavity, the cavity defining lateral walls (22a, 22b) of the flow channel and a bottom wall (22c) of the flow channel connecting the lateral walls,
wherein the electrical sensing module comprises:
at least two electrodes (32, 34), one (32) of the at least two electrodes being provided on one (22a) of the lateral walls of the flow channel, another (34) of the at least two electrodes being provided on the other (22b) of the lateral walls of the flow channel,
the measuring device being **characterized by** further comprising
an insulating filing (36) provided adjacent to each electrode along the flow channel and configured to electrically isolate each electrode from the first semiconductor layer (21).

9. A measuring device according to claim 8, wherein the electrical sensing module (30) comprises at least four electrodes, the insulating fillings (36) being configured to electrically isolate the electrodes from each other.

10. A measuring device according to claim 8 or 9, wherein an interface between each electrode and the adjacent insulating material is airtight.

11. A measuring device according to any one of claims 8 to 10, wherein the second semiconductor layer (25) is provided with a further cavity filled with an insulating filling (27) that is in contact with the oxide layer (23) opposite the first semiconductor layer (21) or in direct contact with the first semiconductor layer (21).

12. A measuring device according to any one of claims 8 to 11, further comprising a mechanical sensing module (40) spaced apart from the electrical sensing module (30) along the flow channel (22) and configured to acquire a mechanical characteristic of the object in the fluid flow.

13. A measuring device according to claim 12, wherein the mechanical sensing module (40) comprises a manipulator provided on one of the lateral walls of the flow channel and a sensor provided on the other of the lateral walls of the flow channel.
